# EUROPÄISCHE PATENTSCHRIFT

(11) **EP 2 364 898 B1**
(45) Veröffentlichungstag und Bekanntmachung des Hinweises auf die Patenterteilung: **09.11.2016**
(21) Anmeldenummer: 11156527.1
(22) Anmeldetag: 02.03.2011
(51) Int. Cl.: B62D 15/02, G08G 1/14, G01S 15/93, B60W 30/06

(54) **Verfahren zum Unterstützen eines Fahrers beim Einparken eines Fahrzeugs in eine Querparklücke sowie Fahrerassistenzeinrichtung**
Method for supporting a driver when parking a vehicle in a diagonal parking space and driver assistance device
Procédé d'assistance d'un conducteur lors du stationnement d'un véhicule dans une place de stationnement oblique et dispositif d'assistance du conducteur

(30) Priorität: 09.03.2010 DE 102010010652
(43) Veröffentlichungstag der Anmeldung: 14.09.2011
(73) Patentinhaber: Valeo Schalter Und Sensoren Gmbh, 74321 Bietiheim-Bissingen (DE)
(72) Erfinder: Grimm, Oliver, 74223, Flein (DE); Jecker, Nicolas, 73730, Esslingen (DE)

(56) Entgegenhaltungen:
- EP-A1- 2 116 425
- EP-A2- 2 081 167
- DE-A1-102005 037 468

## Beschreibung

Die Erfindung betrifft ein Verfahren zum Unterstützen eines Fahrers beim Einparken eines Fahrzeugs in eine Querparklücke mittels einer Fahrerassistenzeinrichtung, bei welchem abhängig von mittels einer Sensoreinrichtung der Fahrerassistenzeinrichtung erfassten Umgebungsbedingungen des Fahrzeugs eine Querparklücke erkannt wird. Des Weiteren betrifft die Erfindung eine Fahrerassistenzeinrichtung zum Unterstützen eines Fahrers beim Einparken eines Fahrzeugs in eine Querparklücke.

Derartige Verfahren und Fahrerassistenzeinrichtungen sind beispielsweise aus der DE 38 13 083 C3 und der WO 2005/102823 A1 bekannt. Diese dort genannten Verfahren sowie die Fahrerassistenzsysteme ermöglichen jedoch nur ein Rückwärtseinparken in eine Querparklücke. Die Einparkmöglichkeiten sind daher beschränkt. Es können daher Situationen auftreten, bei denen eine geeignete Querparklücke vorhanden ist, ein durch die Fahrerassistenzeinrichtung unterstütztes zumindest semi-autonomes Einparken jedoch dennoch nicht möglich ist.

EP 2 081 167 A2 betrifft ein Verfahren und eine Vorrichtung zur Erkennung und/oder Vermessung einer Parklücke, wobei dreidimensionale Daten einer Umgebung eines Fahrzeugs erfasst werden. Objekte in der Umgebung des Fahrzeugs werden in Parklücken begrenzende und nicht Parklücken begrenzende Objekte klassifiziert, ein für das Fahrzeug als Parklücke geeigneter Raumbereich der Umgebung des Fahrzeugs wird ermittelt und Daten über den als Parklücke geeigneten Raumbereich werden an den Fahrer oder an ein übergeordnetes System ausgegeben. Die Ausgabe der Daten über den als Parklücke geeigneten Raumbereich erfolgt bereits vor einer Vorbeifahrt des Fahrzeugs an dem Raumbereich.

Es ist Aufgabe der vorliegenden Erfindung, ein Verfahren zu schaffen, mit dem bzw. mit der das Einparken in Querparklücken verbessert und insbesondere flexibler gestaltet ist.

Diese Aufgabe wird durch ein Verfahren, welches die Merkmale nach Anspruch 1 aufweist, gelöst.

Ein erfindungsgemäßes Verfahren zum Unterstützen eines Fahrers beim Einparken eines Fahrzeugs in eine Querparklücke mittels einer Fahrerassistenzeinrichtung ist dahingehend ausgelegt, dass abhängig von mittels einer Sensoreinrichtung der Fahrerassistenzeinrichtung Umgebungsbedingungen des Fahrzeugs erfasst und eine geeignete Querparklücke erkannt wird. Für das Einparken in eine Querparklücke wird ein Vorwärtseinparken und ein Rückwärtseinparken durch die Fahrerassistenzeinrichtung unterstützt. Es ist nun eine Erweiterung dahingehend gegeben, dass nicht nur ein Rückwärtseinparkvorgang des Fahrzeugs durch die Fahrerassistenzeinrichtung unterstützt wird, sondern dass zusätzlich auch ein Vorwärtseinparken ermöglicht ist. Dadurch kann situationsabhängig die beste Einparkstrategie individueller erfolgen. Dadurch kann die Wahrscheinlichkeit in ganz spezifische Parklücken zu parken wesentlich erhöht werden. Darüber hinaus wird der generelle durch die Fahrerassistenzeinrichtung unterstützte Einparkvorgang flexibilisert. Auf ganz spezifische Situationen im Hinblick auf die Anordnung der Querparklücke und die Umgebung der Querparklücke sowie das einzuparkende Fahrzeug kann daher sehr spezifisch und variabel eingegangen werden.

Es wird vorgesehen, dass das Auswählen eines Vorwärtseinparkens oder eines Rückwärtseinparkens erst dann ermöglicht wird, wenn das Fahrzeug an der Querparklücke zumindest bereichsweise vorbeigefahren ist. Durch die Sensoreinrichtung der Fahrerassistenzeinrichtung beim Vorbeifahren an der Querparklücke wird diese detektiert und als geeignet erkannt. Eine sehr zuverlässige und sichere Möglichkeit der Detektion einer geeigneten Querparklücke ist dadurch gewährleistet.

Es wird bei einem ausgewählten durchzuführenden Vorwärtseinparken des Fahrzeugs in die Querparklücke ein zumindest zweizügiger Parkvorgang durchgeführt. Dies ist insbesondere dann besonders vorteilhaft, wenn im Hinblick auf das Vorschlagen und die Auswahlmöglichkeit, ob ein Vorwärtseinparken oder ein Rückwärtseinparken durchgeführt wird, das Fahrzeug zumindest bereichsweise, vorzugsweise zumindest mit einer Länge größer als zwei Drittel der Fahrzeuglänge an der Querparklücke vorbei gefahren ist. Dadurch wird zum einen eine sichere Detektion einer geeigneten Querparklücke erreicht und dann durch den zumindest zweizügigen Parkvorgang beim Vorwärtseinparken ein sicheres Parkmanöver ermöglicht.

Es ist dann zumindest in einem ersten Zug des Parkvorgangs ein Rückwärtsfahren des Fahrzeugs durchzuführen, bei welchem das Heck des Fahrzeugs von der Querparklücke wegbewegt wird. Dieses Rückwärtsfahren ist somit vorzugsweise zumindest bereichsweise bogenförmig von der Querparklücke weggerichtet durchzuführen. Dadurch wird eine ganz spezifische Parkbahn durchfahren, die in einer minimalen Anzahl von Zügen das Vorwärtseinparken ausgehend von der erwähnten Startposition gewährleistet. Vorzugsweise wird nach dem Erkennen einer geeigneten Querparklücke dem Fahrer die Auswahl eines Vorwärtseinparkens und eines Rückwärtseinparkens angeboten. Eine derartige Ausgestaltung erhöht die Nutzerfreundlichkeit, da der Fahrer dann quasi selbst entscheiden kann, ob das Fahrzeug vorwärts oder rückwärts in die Querparklücke eingeparkt werden soll.

Besonders vorteilhaft wird vorgesehen, dass durch die Fahrerassistenzeinrichtung erkannt wird, ob eine der beiden Einparkalternativen, nämlich ein Vorwärtseinparken oder ein Rückwärtseinparken, nicht durchführbar ist. Abhängig von diesem Erkennen wird dann im Weiteren nur die mögliche der beiden Parkalternativen angeboten und vorgeschlagen. Durch eine derartige Ausgestaltung wird vorausschauend und im Hinblick auf ein sicheres Einparken ein hoher Sicherheitsstandard erreicht.

Es kann auch vorgesehen sein, dass zunächst unabhängig davon, ob eine der beiden Parkalternativen nicht möglich ist, beide Alternativen dem Fahrer durch die Fahrerassistenzeinrichtung angeboten werden und erst dann, wenn der Fahrer eine der beiden Parkalternativen ausgewählt hat, überprüft wird, ob diese in der gegebenen Situation durchführbar ist. Ist dies nicht möglich, so wird dann automatisch dem Fahrer angezeigt, dass die von ihm gewählte Parkalternative nicht durchgeführt werden kann und es wird dann automatisch die möglich andere Parkalternative vorgeschlagen.

Vorzugsweise wird abhängig davon, ob ein Fahrzeugnutzer ein Vorwärtseinparken oder ein Rückwärtseinparken gewählt hat, eine geeignete Parkbahn zum Durchführen der gewählten Einparkalternative durch die Fahrerassistenzeinrichtung bestimmt. Auch dadurch wird somit die wesentlich größere Flexibilität und Variabilität der Fahrerassistenzeinrichtung und dem Durchführen eines zumindest unterstützten und somit zumindest semi-autonomen Einparkvorgangs erreicht. Die Anzahl und Möglichkeit der Bestimmung unterschiedlichster und situationsangepasster Parkbahnen wird dadurch wesentlich erhöht und individuell an die gegebene örtliche Situation angepasst.

Vorzugsweise wird vorgesehen, dass durch die Fahrerassistenzeinrichtung bereits vorgeschlagen wird, ob ein Vorwärtseinparken oder ein Rückwärtseinparken durchgeführt werden soll. Durch eine derartige Priorisierung kann ebenfalls die Sicherheit erhöht werden. Dies ist insbesondere dann vorteilhaft, wenn gegebenenfalls beide Möglichkeiten, nämlich ein Vorwärtseinparken oder ein Rückwärtseinparken möglich wären, für eine der beiden Parkalternativen jedoch das Parkmanöver kritischer, insbesondere wesentlich kritischer im Hinblick auf einzuhaltende Sicherheitsabstände oder dergleichen, erfolgen würde. Dies ist insbesondere dann ein wesentlicher Vorteil, wenn die Fahrbahn glatt ist oder schneebedeckt ist und gegebenenfalls beim semi-autonomen Durchführen des Parkvorgangs ein gewisses Rutschen des Fahrzeugs noch zu berücksichtigen und einzukalkulieren wäre.

Vorzugsweise wird das Vorschlagen einer Einparkalternative abhängig von Umgebungsbedingungen des Fahrzeugs und/oder abhängig von Umgebungsbedingungen der Querparklücke und/oder abhängig von der Position des Fahrzeugs relativ zur Querparklücke durchgeführt. Dadurch können ganz spezifische und charakterisierende Parameter für die Entscheidungsfindung herangezogen werden. Insbesondere für die Aufstellung einer Prioritätenliste, ob ein Vorwärtseinparken oder ein Rückwärtseinparken geeigneter wäre, ist dies besonders hilfreich.

Im Hinblick auf spezifische Umgebungsbedingungen des Fahrzeugs können benachbarte Fahrzeuge, ortsfeste Gegenstände, wie Verkehrsschilder, Bäume oder dergleichen, und allerdings auch Wetterbedingungen berücksichtigt werden. Im Hinblick auf Umgebungsbedingungen der Querparklücke kann in diesem Zusammenhang die spezifische Orientierung der Querparklücke zur Fahrbahn berücksichtigt werden. Dies bedeutet, ob sie beispielsweise tatsächlich senkrecht zur Fahrbahn orientiert ist oder gegebenenfalls sogar in einem relativ großen Winkel dazu angeordnet ist. Darüber hinaus kann auch berücksichtigt werden, ob die Querparklücke zumindest an einer Seite von anderen Komponente, beispielsweise einem Fahrzeug, einem Verkehrsschild, einer Wand oder dergleichen mehr oder minder nah begrenzt ist. Ebenso können hier auch Umgebungsbedingungen im Hinblick auf die Wettersituation und somit auf eine mögliche spezifische Fahrbahnbeschaffenheit geschlossen werden. Auch die Position des Fahrzeugs relativ zur Parklücke kann gerade in sehr beengten Verhältnissen ein mitentscheidender Parameter sein. Dies gerade dahingehend in welche Richtungen und wieweit das Fahrzeug dann beim Einparken zur Seite und/oder nach vorne und/oder nach hinten rangiert werden kann und entsprechenden Ausscherungen möglich sind.

Vorzugsweise wird das Fahrzeug, falls möglich, in dem ersten Zug des Parkvorgangs so positioniert, dass es in einem zweiten Zug vorwärts in die Endposition in der Querparklücke gebracht wird. Es wird also der erste Zug, falls möglich, so gefahren, dass nur ein einziger weiterer zweiter Zug erforderlich ist, um die Parkposition in der Querparklücke erreichen zu können. Ein sehr effizientes, schnelles und auch im Hinblick auf die durchzuführenden Züge relativ unkompliziertes Parkmanöver wird dadurch gewährleistet.

In einer vorteilhaften Ausführung kann vorgesehen sein, dass eine der beiden Einparkalternativen, nämlich das Vorwärtseinparken oder das Rückwärtseinparken als Prioritätsalternative fest eingestellt wird. Dies kann beispielsweise in der Fahrerassistenzeinrichtung entsprechend programmiert und abgespeichert werden. Ein derartiges Vorgehen kann beispielsweise vom Hersteller der Fahrerassistenzeinrichtung als Vorabeinstellung und somit als Grundeinstellung ermöglicht werden. Da es in unterschiedlichen Regionen unterschiedliche Präferenzen im Hinblick auf eine Einparken gibt, kann abhängig davon, wo die Fahrerassistenzeinrichtung eingesetzt werden soll, eine diesbezüglich spezifische bevorzugte Vorabeinstellung erfolgen.

So ist es bekannt, dass beispielsweise in Asien ein Rückwärtseinparken in eine Querparklücke bevorzugt wird. Wird nun die Fahrerassistenzeinrichtung in einem Fahrzeug verbaut, welches in Asien verkauft werden soll, so kann diese Prioritätsalternative das Rückwärtseinparken sein und dies vorab fest eingestellt werden.

Im Unterschied dazu wird im europäischen Raum das Vorwärtseinparken eines Fahrzeugs in eine Querparklücke bevorzugt. Häufig wird ein derartiges Vorwärtseinparken auch in Parkhäusern vorgeschrieben, um zu vermeiden, dass bei einem Rückwärtseinparken die rückwärtigen Wände durch Abgase aus dem Auspuff verschmutzt werden. Auch in diesem Zusammenhang ist es von besonderer Vorteilhaftigkeit, dass das erfindungsgemäße Verfahren eine Fahrerassistenzeinrichtung ermöglicht, die sowohl zum Unterstützen eines Vorwärtseinparkens als auch eines Rückwärtseinparkens ausgebildet ist.

In einer vorteilhaften Ausführung kann auch vorgesehen werden, dass das Einstellen einer Prioritätsalternative nutzerspezifisch erfolgen kann. So kann in individueller Weise jeder Nutzer seine Prioritäten im Hinblick auf das Einparken in eine Querparklücke festlegen und gegebenenfalls jedoch auch verändern. In diesem Zusammenhang kann vorgesehen sein, dass die Fahrerassistenzeinrichtung über Eingabemöglichkeiten verfügt, mittels denen der Nutzer diese Einstellung und Änderung durchführen kann.

Eine Fahrerassistenzeinrichtung ist zum Unterstützen eines Fahrers beim Einparken eines Fahrzeugs in eine Querparklücke ausgebildet. Die Fahrerassistenzeinrichtung umfasst zumindest eine Sensoreinrichtung zum Erfassen von Umgebungsbedingungen des Fahrzeugs und zum Erfassen einer geeigneten Querparklücke. Die Fahrerassistenzeinrichtung umfasst darüber hinaus eine Steuereinheit zum Bestimmen einer durch das Fahrzeug zumindest semi-autonom befahrenen Parkbahn. Die Fahrerassistenzeinrichtung ist zum Unterstützen eines Vorwärtseinparkens und eines Rückwärtseinparkens in die Querparklücke ausgebildet.

In diesem Zusammenhang kann mittels der Sensoreinrichtung eine entsprechende Informationsdetektion der Fahrzeugumgebung und/oder der Querparklücke und/oder eine relative Position des Fahrzeugs zur Querparklücke und/oder Informationen des Fahrzeugs selbst herangezogen werden. Mittels der Steuereinheit werden die entsprechenden Informationen ausgewertet und es können entsprechende Parkbahnen für ein Vorwärtseinparken und ein Rückwärtseinparken in eine Querparklücke bestimmt werden.

Beim semi-autonomen Parkvorgang ist es dem Fahrer zugeteilt, dass er Gas gibt und bremst. Ein Lenken und somit ein Einschlagen der lenkbaren Räder des Kraftfahrzeugs wird automatisch und somit fahrerunabhängig durchgeführt. Alternativ wird das Lenken durch den Fahrer durchgeführt, und die elektronische Fahrerassistenzeinrichtung informiert auf Grundlage einer von der Steuereinrichtung bestimmten Parkbahn des Fahrers durch akustisch und/oder haptisch und/oder optisch wahrnehmbare Signale, welche Lenkaktionen er auszuführen hat. Bei einem autonomen bzw. vollständig automatischen Parkvorgang kann die Fahrerassistenzeinrichtung zusätzlich noch in einen Antriebsstrang des Fahrzeugs eingreifen. Der Fahrer braucht dann nur noch den Parkvorgang freizugeben und gegebenenfalls zu unterbrechen.

Unter einer Querparklücke wird vorliegend eine derartige seitlich zu einer Fahrbahn angrenzende Abstellfläche für ein Fahrzeug verstanden, deren Längsachse bzw. Haupterstreckungsachse in einem Winkel größer 0° un d kleiner 180° zur Längsachse der Fahrbahn orientiert ist. Vorzugsweise werden diesbezüglich Abstellflächen verstanden, deren Längsachse in einem Winkel zwischen 130° und 150° zur Längsachse der Fahrbahn verläuft. Insbesondere seien als derartige Parklücken solche genannt deren Längsachse in einem Winkel zwischen 80° und 100°, i nsbesondere in einem Winkel von 90°, als senkrecht zur Längsachse der Fahrbahn, orientiert ist.

Für das Unterstützen des Fahrers beim Vorwärtseinparken oder beim Rückwärtseinparken in die Querparklücke können unterschiedlichste Szenarien vorgesehen sein. Zum Beispiel kann der Fahrer beim gesamten Vorgang des Einparkens unterstützt werden. Alternativ kann der Fahrer lediglich in einem Abschnitt des Parkvorgangs unterstützt werden. Dann wird die Parkbahn lediglich in diesem Abschnitt bestimmt und das Kraftfahrzeug wird in diesem Abschnitt zumindest semi-autonom geführt. Es wird bevorzugt durch die Steuereinrichtung überprüft, ob ein vorbestimmtes Aktivierungskriterium zum Starten des zumindest semi-autonomen Parkens erfüllt ist oder nicht. Das Unterstützen des Fahrers durch die Fahrerassistenzeinrichtung erfolgt bevorzugt dann, wenn das Aktivierungskriterium erfüllt ist.

Also kann das Unterstützen des Fahrers beim Einparken in die Parklücke dann erfolgen, wenn das Aktivierungskriterium erfüllt ist. Dieses Aktivierungskriterium kann sich z.B. auf die durch die Sensoreinrichtung erfassten Umgebungsbedingungen und/oder auf zumindest einen Fahrparameter des Kraftfahrzeugs beziehen. In einer Ausführungsform wird/werden somit beim Überprüfen des Erfülltseins des Aktivierungskriteriums die erfassten Umgebungsbedingungen des Kraftfahrzeugs und/oder zumindest ein Fahrparameter des Kraftfahrzeugs berücksichtigt. Unter Berücksichtigung der Umgebungsbedingungen des Kraftfahrzeugs und/oder unter Berücksichtigung von Fahrparametern des Kraftfahrzeugs kann die Steuereinrichtung nämlich feststellen, ob das Unterstützen des Fahrers - wie z.B. das Bestimmen einer Parkbahn - überhaupt möglich ist oder nicht.

Als Fahrparameter kann/können z.B. die Geschwindigkeit des Kraftfahrzeugs und/oder seine Beschleunigung und/oder ein Lenkwinkel einer Lenkeinrichtung berücksichtigt werden. Das Aktivierungskriterium kann beinhalten, dass
- der momentane Wert der Geschwindigkeit des Kraftfahrzeugs in einem vorbestimmten Wertebereich, insbesondere unterhalb eines vorbestimmten Grenzwertes, liegt - dieser Grenzwert kann z.B. in einem Wertebereich von 10 km/h bis 30 km/h liegen; und/oder
- der momentane Wert der Beschleunigung des Kraftfahrzeugs in einem vorbestimmten Wertebereich, insbesondere unterhalb eines vorbestimmten Grenzwertes, liegt; und/oder
- der Lenkwinkel der Lenkeinrichtung des Kraftfahrzeugs eine vorbestimmte Lenkwinkeländerung durchläuft und/oder der momentane Lenkwinkel in einem vorbestimmten Lenkwinkelbereich liegt.

Durchläuft der Lenkwinkel eine vorbestimmte Lenkwinkeländerung, so kann dies ein Zeichen dafür sein, dass ein Parkmanöver bevorsteht. Dies kann durch die Steuereinrichtung erkannt werden, und die Steuereinrichtung kann nach Erkennen eines bevorstehenden Parkmanövers die Unterstützung dem Fahrer anbieten oder selbige aktivieren.

Ist die Querparklücke an zwei sich gegenüber liegenden Seiten jeweils durch eine Begrenzung unmittelbar begrenzt, so kann das Aktivierungskriterium ergänzend oder alternativ beinhalten, dass zumindest eine der Begrenzungen der Querparklücke durch die Sensoreinrichtung erfasst wird. Liegt eine der Begrenzungen der Querparklücke in einem Erfassungsbereich der Sensoreinrichtung, so kann die Unterstützung durch die Fahrerassistenzeinrichtung dem Fahrer angeboten oder unmittelbar eingeleitet werden. Wird zumindest eine der Begrenzungen durch die Sensoreinrichtung erfasst, so ist auch die Position der Querparklücke relativ zum Kraftfahrzeug bekannt. Mit der bekannten Position der Parklücke kann die Steuereinrichtung eine optimale Parkbahn für das Kraftfahrzeug bestimmen.

Ergänzend oder alternativ kann das Aktivierungskriterium beinhalten, dass sich beim Vorwärtseinparken, insbesondere zu Beginn des Vorwärtseinparkens, das Kraftfahrzeug durch den Fahrer gesteuert in Richtung zur Querparklücke hin bewegt und/oder sich in einem Abstand kleiner als ein vorbestimmter Abstandswert von der Querparklücke befindet. Bewegt sich das Kraftfahrzeug durch den Fahrer gelenkt - also unabhängig von der Fahrerassistenzeinrichtung bzw. weder semi-autonom noch autonom - in Richtung der Querparklücke hin, so stellt dies ein Zeichen dafür dar, dass der Fahrer einzuparken vorhat. Eine solche Situation kann durch die Steuereinrichtung -wenn die Position der Querparklücke relativ zum Kraftfahrzeug bekannt ist - erkannt werden. Nach Erkennen einer solchen Situation kann die Steuereinrichtung die Unterstützung dem Fahrer anbieten oder selbige sofort aktivieren. Beim Überprüfen des Erfülltseins des Aktivierungskriteriums kann auch der aktuelle Abstand zwischen der Querparklücke und dem Kraftfahrzeug berücksichtigt werden. Unterschreitet dieser Abstand den vorbestimmten Abstandswert, so kann das Aktivierungskriterium erfüllt sein. Dieser vorbestimmte Abstandswert kann z.B. in einem Wertebereich von 0 m bis 3 m, bevorzugt in einem Wertebereich von 0 m bis 1 m liegen.

Das Aktivierungskriterium kann also abhängig von Erfassungsbereichen der Sensoreinrichtung bzw. von der Anzahl von Sensoren der Sensoreinrichtung und/oder von deren Anordnung am Kraftfahrzeug konzipiert werden. Umfasst die Sensoreinrichtung z.B. zwei Sensoren, einen an der linken Seitenflanke und einen an der rechten Seitenflanke des Kraftfahrzeugs, deren Haupterfassungsrichtungen in Fahrzeugquerrichtung orientiert sind, so kann das Unterstützen des Fahrers beim Vorwärtseinparken dann angeboten oder aktiviert werden, wenn sich das Kraftfahrzeug zumindest bereichsweise bereits in der Parklücke befindet. Erfasst die Sensoreinrichtung jedoch auch einen Bereich vor dem Kraftfahrzeug, so kann die Unterstützung viel früher angeboten oder eingeleitet werden. Je nach Ausgestaltung der Sensoreinrichtung kann somit jeweils ein optimales Aktivierungskriterium für das Unterstützen des Fahrers beim Vorwärtseinparken in die Querparklücke festgelegt werden.

Das Verfahren kann z.B. in einem solchen Ablauf verwirklicht werden: Die Sensoreinrichtung umfasst zumindest zwei Ultraschallsensoren, einen an der linken Seitenflanke und einen an der rechten Seitenflanke des Kraftfahrzeugs. Die Erfassungsbereiche bzw. die Erfassungsrichtungen der Ultraschallsensoren sind in Fahrzeugquerrichtung orientiert. Die Ultraschallsensoren sind jeweils im vorderen Bereich des Kraftfahrzeugs, z.B. an einem vorderen Stoßfänger oder im Bereich der Außenspiegel, angebracht. Das Kraftfahrzeug befindet sich auf einer Fahrbahn, der Fahrer fährt geradeaus, nämlich auf einer rechten Spur der Fahrbahn. Links von der Fahrbahn befinden sich eine Vielzahl von Querparklücken, nämlich solche Parklücken, deren Längsachsen senkrecht zur Fahrbahn orientiert sind. Der Fahrer will das Kraftfahrzeug in eine der Querparklücken einparken, nämlich vorwärts. Der Fahrer reduziert die Geschwindigkeit des Kraftfahrzeugs auf eine Geschwindigkeit kleiner 10 km/h. Die Steuereinrichtung der Fahrerassistenzeinrichtung empfängt Signale von einer Tachoeinrichtung des Kraftfahrzeugs, die die Steuereinrichtung über die aktuelle Geschwindigkeit des Kraftfahrzeugs informieren. Die Steuereinrichtung erkennt nun, dass sich das Kraftfahrzeug mit Schrittgeschwindigkeit bewegt. Der Fahrer steuert nun das Kraftfahrzeug mit Hilfe des Lenkrades nach links, um in eine Querparklücke einzufahren. Gelangt der vordere Stoßfänger des Kraftfahrzeugs in die Querparklücke, so befinden sich die seitlich stehenden und die Querparklücke unmittelbar begrenzenden Kraftfahrzeuge in den jeweiligen Erfassungsbereichen der Ultraschallsensoren. Die Steuereinrichtung, die Messwerte für die durch die Ultraschallsensoren gemessenen jeweiligen Entfernungen empfängt, erkennt, dass sich das Kraftfahrzeug bereits bereichsweise in der Querparklücke befindet. Die Steuereinrichtung kennt sogar die jeweils momentane Position des Kraftfahrzeugs in der Querparklücke, nämlich abhängig von sowohl den aktuellen als auch den zuvor erfassten Messwerten der Ultraschallsensoren. Die Steuereinrichtung bestimmt nun eine Parkbahn, die durch das Kraftfahrzeug zum Erreichen einer Endposition in der Querparklücke durchfahren werden muss. Die Steuereinrichtung sendet Steuersignale an eine Lenkeinrichtung des Kraftfahrzeugs und greift somit in die Lenkung des Kraftfahrzeugs automatisch ein. Der Fahrer muss lediglich Gas geben und bremsen. Der Fahrer kann auch die Unterstützung durch die Fahrerassistenzeinrichtung ausschalten, nämlich z.B. durch ein Gegenlenken des Lenkrades. Die Steuereinrichtung kann die Parkbahn für das Kraftfahrzeug vorbestimmen. Die Parkbahn kann auch durch die Steuereinrichtung geregelt werden, nämlich derart, dass der Abstand zwischen dem linken Ultraschallsensor und dem links der Parklücke stehenden Kraftfahrzeug jeweils gleich dem Abstand zwischen dem rechten Ultraschallsensor und dem rechts der Parklücke stehenden Kraftfahrzeug ist.

Zusätzlich oder alternativ kann das Aktivierungskriterium beinhalten, dass das Kraftfahrzeug bereits vollständig in der Parklücke eingeparkt ist. Der Fahrer kann dann durch die Fahrerassistenzeinrichtung beim Vornehmen einer Korrektur der Position des Kraftfahrzeugs in der Querparklücke unterstützt werden. Dies kann z.B. so aussehen, dass das Kraftfahrzeug zumindest semi-autonom aus der Querparklücke zunächst ausgefahren und dann wieder entlang einer bestimmten Parkbahn eingeparkt wird. Dies ist besonders benutzerfreundlich, denn der Fahrer kann mit dem Kraftfahrzeug in die Parklücke einfahren, ohne sich um eine vernünftige Endposition des Kraftfahrzeugs in der Parklücke kümmern zu müssen. Die endgültige Position des Kraftfahrzeugs in der Parklücke wird mit Hilfe der Fahrerassistenzeinrichtung eingenommen.

Wie bereits ausgeführt, kann die Steuereinrichtung seitlich am Kraftfahrzeug angebrachte Ultraschallsensoren aufweisen. Dann gelingt es, die Parklücke begrenzende Objekte zu erfassen und somit die Parklücke selbst bezüglich des Kraftfahrzeugs zu orten. Die Sensoreinrichtung kann auch derart konzipiert werden, dass sie an einem Boden angebrachte Markierungen - wie z.B. weiße Streifen - erfassen kann. Dann kann der Fahrer auch beim Einparken in eine seitlich jeweils durch eine am Boden angebrachte Markierung begrenzte Querparklücke unterstützt werden. Sensoren, die die am Boden angebrachten Markierungen erfassen können, können z.B. optische Sensoren, Kameras und ähnliches sein.

Die Bestimmung der Parkbahn erfolgt abhängig von den durch die Sensoreinrichtung erfassten Umgebungsbedingungen. Das Erfassen der Umgebungsbedingungen kann beinhalten, dass eine Position der Begrenzungen der Querparklücke bzw. eine Position der Querparklücke relativ zum Kraftfahrzeug und/oder zumindest eine Abmessung der Querparklücke erfasst wird/werden. Die Parkbahn kann also abhängig von der Position der Querparklücke relativ zum Kraftfahrzeug und/oder abhängig von zumindest einer Abmessung der Querparklücke bestimmt werden. Z.B. kann durch die Sensoreinrichtung ein Abstand zwischen zwei seitlichen Begrenzungen der Querparklücke als ihre Breite erfasst werden, und abhängig von dieser Breite kann dann die Parkbahn durch die Steuereinrichtung bestimmt werden.

Die Steuereinrichtung kann die Parkbahn derart bestimmen, dass in einer Endposition des Kraftfahrzeugs in der Querparklücke zumindest ein vorbestimmter Punkt, insbesondere jegliche Punkte, einer in Fahrzeuglängsrichtung zentral verlaufenden Mittellängsachse des Kraftfahrzeugs einen gleichen Abstand zu den Begrenzungen der Parklücke aufweist/aufweisen. Somit wird das Kraftfahrzeug mittig in die Parklücke eingeparkt, selbst dann, wenn die seitlich stehenden und die Querparklücke begrenzenden Fahrzeuge schräg in den jeweiligen Parklücken stehen. Der Fahrer hat somit sowohl links als auch rechts des Kraftfahrzeugs genügend Platz, um gegebenenfalls alle Türen des Kraftfahrzeugs zu öffnen.

Bei der Bestimmung der Parkbahn sind unterschiedliche Ausführungsformen vorgesehen. Das Bestimmen der Parkbahn kann beinhalten, dass zumindest während einer vorbestimmten Zeitdauer während des Parkvorgangs die Parkbahn durch die Steuereinrichtung geregelt wird. Diese Regelung erfolgt bevorzugt im Hinblick darauf, dass das Kraftfahrzeug mittig in die Parklücke eingeparkt wird bzw. dass zumindest ein Punkt der in Fahrzeuglängsrichtung zentral verlaufenden Mittellängsachse des Kraftfahrzeugs einen gleichen Abstand zu den Begrenzungen der Parklücke aufweist. Die Parkbahn wird durch die Steuereinrichtung insbesondere dann geregelt, wenn an den Seitenflanken des Kraftfahrzeugs jeweils lediglich ein Sensor, z.B. ein Ultraschallsensor, angebracht ist. Dann kann die Sensoreinrichtung nämlich die Querparklücke erst dann erfassen, wenn sich das Kraftfahrzeug bereichsweise in der Querparklücke befindet. Erst dann kann die Bestimmung der Parkbahn erfolgen. Umfasst die Sensoreinrichtung zwei jeweils an einer Seitenflanke des Kraftfahrzeugs angebrachte Sensoren, so kann die Parkbahn im einfachsten Fall derart geregelt werden, dass die Abstände der beiden Sensoren zu den jeweiligen Begrenzungen der Querparklücke jeweils gleich sind. Bei dieser Ausführungsform kann das Unterstützen des Fahrers beim Vorwärtseinparken in eine Querparklücke mit einfachsten Mitteln erfolgen, nämlich mit Hilfe lediglich zweier Sensoren.

Ergänzend oder alternativ kann das Bestimmen der Parkbahn beinhalten, dass zumindest ein Abschnitt der Parkbahn vorab bestimmt wird. Die Länge dieses Abschnittes, welcher durch die Steuereinrichtung vorab berechnet werden kann, hängt bevorzugt von einem Erfassungsbereich der Sensoreinrichtung ab. Je nach dem, welchen Bereich der Umgebung des Kraftfahrzeugs die Sensoreinrichtung erfassen kann bzw. je nach Ausgestaltung der Sensoreinrichtung kann jeweils ein Parkbahn-Abschnitt unterschiedlicher Länge vorab bestimmt werden. Die Länge dieses Abschnittes kann auch davon abhängig gemacht werden, ob das Kraftfahrzeug an der Querparklücke bereits vorbei gefahren ist - was beim Vorwärtseinparken eher selten der Fall ist. Erfasst die Sensoreinrichtung einen seitlichen Bereich des Kraftfahrzeugs und fährt das Kraftfahrzeug an der Querparklücke vorbei, so kann auch die Parkbahn für den gesamten Parkvorgang vorab bestimmt werden. Dies setzt voraus, dass die Position der Querparklücke relativ zum Kraftfahrzeug sowie ihre Breite in der Steuereinrichtung der Fahrerassistenzeinrichtung bekannt sind. Das Vorabbestimmen der Parkbahn hat gegenüber einer Regelung der Parkbahn den Vorteil, dass bei einem semi-autonomen Parkvorgang das Lenkrad gleichmäßig gelenkt wird, ohne sprunghaft bewegt werden zu müssen.

Abhängig von den erfassten Umgebungsbedingungen, insbesondere abhängig von einer Breite der Querparklücke, kann die Parkbahn derart bestimmt werden, dass das Kraftfahrzeug möglichst in einem einzigen Zug in die Parklücke eingeparkt wird. Ist ein einzügiges Einparken aufgrund der Position des Kraftfahrzeugs relativ zur Parklücke und/oder aufgrund einer zu geringen Breite der Parklücke nicht möglich, so können auch weitere Züge, nämlich ein zweiter Zug rückwärts und ein dritter Zug vorwärts, vorgesehen sein. Somit wird erreicht, dass das Kraftfahrzeug auch bei relativ ungünstigen Umgebungsbedingungen eingeparkt werden kann.

Bei der Bestimmung der Parkbahn, insbesondere bei einer Regelung der Parkbahn, können sowohl die jeweils momentanen Messwerte der Sensoreinrichtung als auch die Messwerte vorheriger Messvorgänge berücksichtigt werden. Es wird somit möglich, die jeweils momentane Position des Kraftfahrzeugs in der Parklücke zu erfassen. Diese Ausführungsform erweist sich insbesondere bei einer solchen Sensoreinrichtung als besonders vorteilhaft, die die seitlichen Bereiche des Kraftfahrzeugs erfassen kann, nämlich z.B. mit Hilfe zweier Ultraschallsensoren. Gelangen die Sensoren in die Parklücke - die Position der Sensoren am Kraftfahrzeug ist bekannt -, so ist die Position des Kraftfahrzeugs in der Parklücke bekannt. Bewegt sich das Kraftfahrzeug tiefer in die Parklücke hinein, so kann anhand der seitlichen Verläufe der Messwerte der Sensoren die jeweils augenblickliche Position des Kraftfahrzeugs in der Parklücke berechnet werden.

Bezüglich der Ausgestaltung der Sensoreinrichtung kann diese zum Beispiel zumindest einen Ultraschallsensor und/oder zumindest ein Radargerät und/oder zumindest einen optischen Sensor und/oder zumindest eine Kamera umfassen. Die Sensoreinrichtung kann einen Bereich links vom Kraftfahrzeug und/oder einen Bereich rechts vom Kraftfahrzeug und/oder einen Bereich vor dem Kraftfahrzeug und/oder einen Bereich hinter dem Kraftfahrzeug erfassen. Zum Beispiel kann die Sensoreinrichtung zwei jeweils an einer Seitenflanke des Kraftfahrzeugs angeordnete Ultraschallsensoren aufweisen; dann wird eine Regelung der Parkbahn beim Durchführen des zumindest semi-autonomen Parkvorgangs ermöglicht.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine schematischer Darstellung einer Draufsicht auf eine Parksituation, bei der das in eine Querparklücke einzuparkende Fahrzeug an der Startposition einer Parkbahn zum Vorwärtseinparken in die Querparklücke positioniert ist;
- Fig. 2: eine schematische Darstellung einer Draufsicht, bei der in Folge zur Parksituation gemäß Fig. 1 das Fahrzeug den Endpunkt eines ersten Zuges des Parkvorgangs erreicht hat; und
- Fig. 3: eine schematische Darstellung einer Draufsicht auf eine schrittweise gezeigte Parksituation, bei der das Fahrzeug ausgehend von Fig. 2 in einem zweiten Zug vorwärts in die Querparklücke einfährt und gemäß der Darstellung in Fig. 3 die dortige Endposition erreicht hat.

In den Figuren werden gleiche oder funktionsgleiche Elemente mit den gleichen Bezugszeichen versehen.

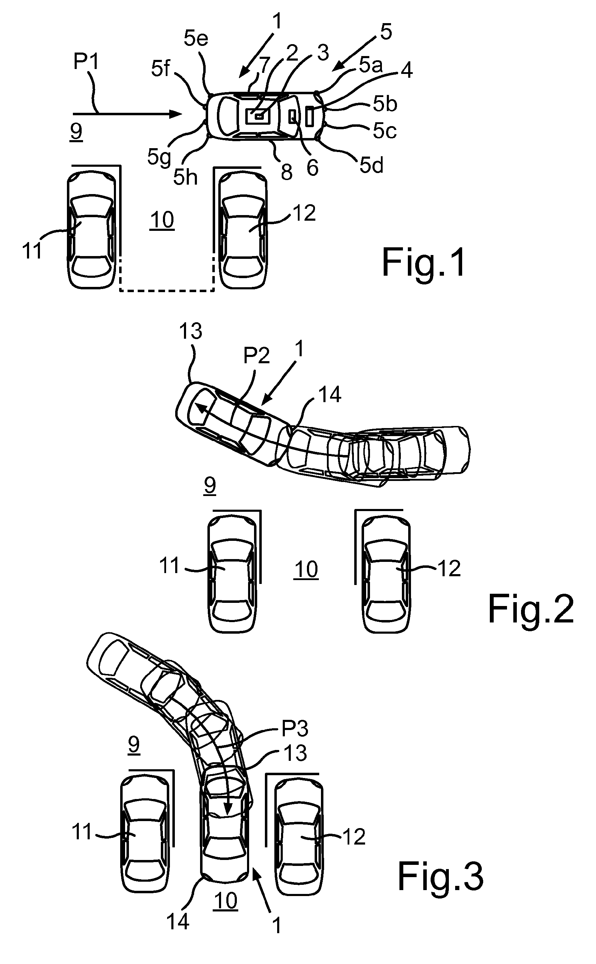

In Fig. 1 ist in einer schematischen Draufsicht eine Parksituation gezeigt. Ein einzuparkendes Fahrzeug 1, welches ein Personenkraftwagen ist, umfasst eine Fahrerassistenzeinrichtung bzw. ein Fahrerassistenzsystem, welches zum zumindest semi-autonomen Unterstützen eines Fahrers des Fahrzeugs 1 beim Einparken in eine Querparklücke 10 ausgebildet ist. Die Fahrerassistenzeinrichtung umfasst eine Steuereinheit 2 mit zumindest einem Mikroprozessor 3. Das Fahrzeug 1 weist darüber hinaus eine Lenkeinrichtung 4 auf, in die die Fahrerassistenzeinrichtung über Steuersignale der Steuereinheit 2 einwirken kann und dadurch lenkbare Räder des Fahrzeugs 1 automatisch bewegt werden können. Die Fahrerassistenzeinrichtung umfasst darüber hinaus eine Sensoreinrichtung 5, die im Ausführungsbeispiel an einem vorderen Stoßfänger 4 Ultraschallsensoren 5a, 5b, 5c und 5d aufweist. Darüber hinaus sind an einem hinteren Stoßfänger weitere Ultraschallsensoren 5e, 5f, 5g und 5h ausgebildet. Sowohl die Anzahl als auch die Position der Ultraschallsensoren 5a bis 5h ist beispielhaft. Mittels dieser Sensoren 5a bis 5h wird die Umgebung des Fahrzeugs 1 erfasst. Insbesondere wird damit eine geeignete Querparklücke zum Einparken des Fahrzeugs 1 detektiert, insbesondere wenn der Fahrer eine Parklückensuche der Fahrerassistenzeinrichtung aktiviert hat.

Die Fahrerassistenzeinrichtung ist dahingehend ausgebildet, dass sie zur Unterstützung eines Einparkens des Fahrzeugs 1 in die Querparklücke 10 semi-autonom unterstützt. Mittels der Fahrerassistenzeinrichtung kann ein zumindest semi-autonomes Einparken in Vorwärtsrichtung des Fahrzeugs 1 als auch in Rückwärtsrichtung des Fahrzeugs 1 ermöglicht werden. Dies bedeutet, dass die Fahrerassistenzeinrichtung sowohl ein Vorwärtseinparken als auch ein Rückwärtseinparken in eine Querparklücke unterstützt.

Die Fahrerassistenzeinrichtung ist in diesem Zusammenhang auch dazu ausgebildet, dem Fahrer eine entsprechende Optionalität mitzuteilen und anzuzeigen, wobei dazu eine Anzeigeeinheit 6 im Fahrzeug 1 vorgesehen ist. Diese kann zur bildhaften und/oder textlichen Darstellung und/oder zur Sprachausgabe ausgebildet sein.

Die Fahrerassistenzeinrichtung ist darüber hinaus derart ausgebildet, dass sie nach dem Erkennen einer geeigneten Querparklücke dem Fahrer die Auswahl eines Vorwärtseinparkens und/oder eines Rückwärtseinparkens anbietet. Dies bedeutet, dass beispielsweise auf der Anzeigeeinheit 6 das Erkennen einer geeigneten Querparklücke angezeigt wird und darüber hinaus die Auswahlmöglichkeit angeboten wird, ob in diese Querparklücke vorwärts oder rückwärts eingeparkt werden soll. Der Fahrer kann dann selbst entscheiden, welche der beiden Einparkalternativen durch die Fahrerassistenzeinrichtung unterstützt durchgeführt werden soll.

Insbesondere ist die Fahrerassistenzeinrichtung auch dahingehend ausgebildet, dass sie erkennt, ob eine der beiden Einparkalternativen aufgrund der gegebenen Umgebungsituation undurchführbar ist. Tritt beispielsweise die Situation ein, dass ein Rückwärtseinparken nicht möglich ist, so ist die Fahrerassistenzeinrichtung dahingehend ausgebildet, dass sie dann nur ein Vorwärtseinparken vorschlägt.

Es kann auch vorgesehen sein, dass die Fahrerassistenzeinrichtung dahingehend konzipiert ist, dass sie dann, wenn sowohl ein Vorwärtseinparken als auch ein Rückwärtseinparken in eine Querparklücke möglich ist, anhand von Entscheidungskritierien eine zu priorisierende Einparkalternative vorschlägt. Für diese Entscheidung können beispielsweise Informationen über die Umgebung des Fahrzeugs und/oder über die Umgebung der gefundenen Querparklücke und/oder Informationen der Position des einzuparkenden Fahrzeugs relativ zur Querparklücke und/oder Informationen des einzuparkenden Fahrzeugs relativ zu Objekten, die die Querparklücke begrenzen und/oder eine Position der Querparklücke relativ zur Fahrbahn, auf der sich das einzuparkende Fahrzeug befindet und/oder die Beschaffenheit der Fahrbahn und/oder die Beschaffenheit der Querparklückenoberfläche herangezogen werden.

Im Hinblick auf das in Fig. 1 bis 3 gezeigte Ausführungsbeispiel wird gemäß der Darstellung in Fig. 1 dahingehend verfahren, dass das Fahrzeug 1 zunächst praktisch im Wesentlichen vollständig an der Querparklücke 10 vorbeifährt. Im Ausführungsbeispiel ist die Querparklücke 10 im wesentlichen senkrecht zur Fahrbahn 9, auf der sich das Fahrzeug 1 gemäß der Pfeilrichtung bewegt hat, orientiert. Die Querparklücke 10 ist links durch ein bereits geparktes Fahrzeug 11 und rechts durch ein bereits geparktes Fahrzeug 12 begrenzt. Das einzuparkende Fahrzeug 1 hat in der Darstellung gemäß Fig. 1 die Startposition zum Durchführen eines Vorwärtseinparkens in die Parklücke 10 erreicht. Bei dem in Fig. 1 gezeigten Ausführungsbeispiel ist vorgesehen, dass die Optionalität, ob ein Vorwärtseinparken oder ein Rückwärtseinparken in die Querparklücke 10 durchgeführt werden soll erst dann dem Fahrer durch die Fahrerassistenzeinrichtung angeboten wird, wenn dieses Fahrzeug 1 zumindest zu zwei Drittel seiner Länge an der Querparklücke 10 vorbeigefahren ist (Fahrt in Richtung des Pfeils P1). Dann ist bereits eine sehr sichere und präzise Selektion dahingehend gewährleistet, ob die Querparklücke 10 für ein Einparken geeignet ist.

In der gezeigten Ausführung soll das Fahrzeug 1 gemäß der Option eines Vorwärtseinparkens in die Querparklücke 10 eingeparkt werden. Es kann hier sowohl eine Situation gegeben sein, bei der auch ein Rückwärtseinparken in die Querparklücke 10 möglich gewesen wäre, sich jedoch der Fahrer für ein Vorwärtseinparken entschieden hat. Es kann jedoch auch die Situation gegeben sein, dass die Fahrerassistenzeinrichtung ermittelt hat, dass in die Querparklücke 10 nur gemäß einem Vorwärtseinparken eingeparkt werden kann.

Das Fahrzeug 1 ist mit seiner rechten Längsseite 8 der Querparklücke 10 bzw. dem geparkten Fahrzeug 12 zugewandt und mit seiner linken Seite 7 diesbezüglich abgewandt. Mit der Wahl, dass ein Vorwärtseinparken in die Querparklücke 10 durchgeführt werden soll, bestimmt die Fahrerassistenzeinrichtung eine geeignete Parkbahn. Im Ausführungsbeispiel wird insbesondere auch aufgrund der Umgebungsbedingungen und der Ausgestaltung der Querparklücke 10 ein zweizügiger Parkvorgang bestimmt. Ausgehend von der in Fig. 1 gezeigten Startposition zu Beginn der Parkbahn wird das Fahrzeug 1 gemäß der Darstellung in Fig. 2 in einem ersten Zug rückwärts gefahren. Dabei wird gemäß der Pfeildarstellung P2 das Heck 13 des Fahrzeugs 1 von der Querparklücke 10 wegbewegt, so dass sich daraus folgend die Frontseite 14 des Fahrzeugs 1 der Querparklücke 10 zuwendet.

In der Darstellung gemäß Fig. 2 hat das Fahrzeug 1 die Endposition des ersten Zugs des Parkvorgangs erreicht.

Gemäß der weiteren schematischen Draufsichtdarstellung in Fig. 2 wird dann in einem einzigen weiteren zweiten Zug ausgehend von der Position in Fig. 2 ein Vorwärtsfahren des Fahrzeugs 1 durchgeführt und gemäß der Pfeildarstellung P3 das Fahrzeug 1 vorwärts in die Querparklücke 10 eingeparkt. In Fig. 3 ist quasi die Endposition des geparkten Fahrzeugs 1 gezeigt.

Alternativ oder zusätzlich kann vorgesehen sein, dass die Sensoreinrichtung 5 auch zumindest eine Kamera zur Bildaufnahme im Infrarotbereich oder im für den Menschen sichtbaren Spektralbereich aufweist. Mittels dieser kann auch Information über eine geeignete Querparklücke zum Einparken des Fahrzeugs 1 gewonnen werden. Mit einer derartigen Ausgestaltung ist es dann auch möglich, dass im Unterschied zur Darstellung in Fig. 1 das Fahrzeug 1 nicht im wesentlichen vollständig an der Querparklücke 10 vorbeifahren muss, um diese als geeignet zu erkennen. Vielmehr kann dies auch dann bereits schon deutlich vorher erfolgen und entschieden werden.

## Patentansprüche

1. Verfahren zum Unterstützen eines Fahrers beim Einparken eines Fahrzeugs (1) in eine Querparklücke (10) mittels einer Fahrerassistenzeinrichtung, bei welchem abhängig von mittels einer Sensoreinrichtung (5) der Fahrerassistenzeinrichtung erfassten Umgebungsbedingungen des Fahrzeugs (1) eine Querparklücke (10) erkannt wird, wobei für das Einparken in eine Querparklücke (10) ein Vorwärtseinparken und ein Rückwärtseinparken durch die Fahrerassistenzeinrichtung unterstützt wird
**dadurch gekennzeichnet, dass**
das Auswählen eines Vorwärtseinparkens oder eines Rückwärtseinparkens erst dann ermöglicht wird, wenn das Fahrzeug (1) an der Querparklücke (10) zumindest bereichsweise vorbeigefahren ist wobei bei einem Vorwärtseinparken ein zumindest zweizügiger Parkvorgang durchgeführt wird und in einem erster Zug des Parkvorgangs ein Rückwärtsfahren durchgeführt wird, bei welchem das Heck (13) des Fahrzeugs (1) von der Querparklücke (10) wegbewegt wird.

2. Verfahren nach Anspruch 1,
**dadurch gekennzeichnet, dass**
nach dem Erkennen einer geeigneten Querparklücke (10) dem Fahrer die Auswahl eines Vorwärtseinparkens und eines Rückwärtseinparkens angeboten wird.

3. Verfahren nach Anspruch 2,
**dadurch gekennzeichnet, dass**
durch die Fahrerassistenzeinrichtung erkannt wird, ob eine der beiden Einparkalternativen undurchführbar ist, und abhängig davon dann nur die mögliche Parkalternative angeboten wird.

4. Verfahren nach einem der vorhergehenden Ansprüche,
**dadurch gekennzeichnet, dass**
abhängig davon, ob ein Fahrzeugnutzer ein Vorwärtseinparken oder ein Rückwärtseinparken gewählt hat, eine geeignete Parkbahn zum Durchführen der gewählten Einparkalternative bestimmt wird.

5. Verfahren nach einem der vorhergehenden Ansprüche,
**dadurch gekennzeichnet, dass**
durch die Fahrerassistenzeinrichtung vorgeschlagen wird, ob ein Vorwärtseinparken oder ein Rückwärtseinparken durchgeführt werden soll.

6. Verfahren nach Anspruch 5,
**dadurch gekennzeichnet, dass**
das Vorschlagen einer Einparkalternative abhängig von Umgebungsbedingungen des Fahrzeugs (1) und/oder Umgebungsbedingungen der Querparklücke (10) und/oder der Position des Fahrzeugs (1) relativ zur Querparklücke (10) erfolgt.

7. Verfahren nach Anspruch 1,
**dadurch gekennzeichnet, dass**
das Fahrzeug (1), falls möglich, in dem ersten Zug so positioniert wird, dass es in einem zweiten Zug vorwärts in die Endposition in der Querparklücke (10) gebracht wird.

8. Verfahren nach einem der vorhergehenden Ansprüche,
**dadurch gekennzeichnet, dass**
eine der beiden Einparkalternativen als Prioritätsalternative fest eingestellt wird.

9. Verfahren nach Anspruch 8,
**dadurch gekennzeichnet, dass**
dies Nutzerspezifisch eingestellt und verändert werden kann.

## Claims

1. Method for supporting a driver when parking a vehicle (1) in a diagonal parking space (10) by means of a driver assistance device, in which method a diagonal parking space (10) is detected as a function of ambient conditions of the vehicle (1) which are sensed by means of a sensor device (5) of the driver assistance device, wherein, for the purpose of parking in a diagonal parking space (10), forward parking and reverse parking are supported by the driver assistance device,
**characterized in that**
the selection of forward parking or of reverse parking is not made possible until the vehicle (1) has at least partially driven past the diagonal parking space (10), wherein in the case of forward parking an at least two-movement parking manoeuvre is carried out, and in a first movement of the parking manoeuvre reverse parking is carried out during which the rear (13) of the vehicle (1) is moved away from the diagonal parking space (10).

2. Method according to Claim 1,
**characterized in that**
after the detection of a suitable diagonal parking space (10), the selection of forward parking and of reverse parking is offered to the driver.

3. Method according to Claim 2,
**characterized in that**
the driver assistance device detects whether one of the two parking alternatives cannot be carried out, and depending on this only the parking alternative which is possible is then offered.

4. Method according to one of the preceding claims, **characterized in that**
depending on whether a vehicle user has selected forward parking or reverse parking, a suitable parking path is determined for carrying out the selected parking alternative.

5. Method according to one of the preceding claims, **characterized in that**
the parking assistance device proposes whether forward parking or reverse parking is to be carried out.

6. Method according to Claim 5,
**characterized in that**
a parking alternative is proposed in dependence on ambient conditions of the vehicle (1) and/or ambient conditions of the diagonal parking space (10) and/or the position of the vehicle (1) relative to the diagonal parking space (10).

7. Method according to Claim 1,
**characterized in that**
if possible the vehicle (1) is positioned in the first movement in such a way that in the second movement it is moved forwards into the final position in the diagonal parking space (10).

8. Method according to one of the preceding claims, **characterized in that**
one of the two parking alternatives is permanently set as a priority alternative.

9. Method according to Claim 8,
**characterized in that**
this can be set and changed in a user-specific fashion.

## Revendications

1. Procédé d'assistance au conducteur lors de manoeuvres de stationnement d'un véhicule (1) dans un emplacement (10) de stationnement transversal, dans lequel la présence d'un emplacement (10) de stationnement transversal est reconnue en fonction de conditions d'environnement du véhicule (1) saisies au moyen d'un dispositif de détection (5) du dispositif d'assistance au conducteur, une manoeuvre de stationnement avant et une manoeuvre de stationnement arrière étant assistées par le dispositif d'assistance au conducteur,
**caractérisé en ce que**
la sélection d'une manoeuvre de stationnement avant ou d'une manoeuvre de stationnement arrière n'est possible qu'après que le véhicule (1) est passé au moins devant une partie de l'emplacement (10) de stationnement transversal,
**en ce qu'**une manoeuvre de stationnement en au moins deux phases est exécutée dans le cas d'une manoeuvre de stationnement avant et
**en ce que** dans la première phase de la manoeuvre de stationnement, un déplacement vers l'arrière dans lequel l'arrière (13) du véhicule (1) est éloigné de l'emplacement (10) de stationnement transversal est effectué.

2. Procédé selon la revendication 1, **caractérisé en ce qu'**après que la présence d'un emplacement (10) de stationnement transversal approprié a été reconnue, la sélection entre une manoeuvre de stationnement avant et une manoeuvre de stationnement arrière est proposée au conducteur.

3. Procédé selon la revendication 2, **caractérisé en ce que** si le dispositif d'assistance au conducteur reconnaît que l'une des deux variantes de manoeuvre de stationnement ne peut être exécutée, seule la manoeuvre de stationnement possible est proposée.

4. Procédé selon l'une des revendications précédentes, **caractérisé en ce qu'**un parcours convenant pour l'exécution de la variante de manoeuvre de stationnement sélectionnée par le conducteur est déterminé selon que l'utilisateur du véhicule a sélectionné une manoeuvre de stationnement avant ou une manoeuvre de stationnement arrière.

5. Procédé selon l'une des revendications précédentes, **caractérisé en ce que** le dispositif d'assistance au conducteur indique si la manoeuvre de stationnement qui doit être exécutée est une manoeuvre de stationnement avant ou une manoeuvre de stationnement arrière.

6. Procédé selon la revendication 5, **caractérisé en ce que** la manoeuvre de stationnement proposée dépend des conditions d'environnement du véhicule (1), des conditions d'environnement de l'emplacement (10) de stationnement transversal et/ou de la position du véhicule (1) par rapport à l'emplacement (10) de stationnement transversal.

7. Procédé selon la revendication 1, **caractérisé en ce que** si possible, le véhicule (1) est positionné lors de la première phase de manière à être amené en marche avant dans sa position finale dans l'emplacement (10) de stationnement transversal au cours de la deuxième phase.

8. Procédé selon l'une des revendications précédentes, **caractérisé en ce que** l'une des deux variantes de manoeuvre de stationnement est fixée comme variante prioritaire.

9. Procédé selon la revendication 8, **caractérisé en ce qu'**il peut être réglé et modifié de manière spécifique à l'utilisateur.
